(19) Europäisches Patentamt

European Patent Office

Office européen des brevets

(11) **EP 0 943 515 B1**

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(51) Int Cl.⁷: **B60T 8/24**

(21) Anmeldenummer: **99103835.7**

(22) Anmeldetag: **27.02.1999**

(54) **Verfahren zur Regelung des Gierverhaltens von Fahrzeugen**

Method for controlling of the yaw-behavior of vehicles

Procédé pour le règlement de l'attitude de lacet de véhicules

(84) Benannte Vertragsstaaten:
**DE ES FR GB IT**

(30) Priorität: **20.03.1998 DE 19812238**

(43) Veröffentlichungstag der Anmeldung:
**22.09.1999 Patentblatt 1999/38**

(73) Patentinhaber: **DaimlerChrysler AG**
**70567 Stuttgart (DE)**

(72) Erfinder:
• **Böttiger, Friedrich**
**73733 Esslingen (DE)**
• **Suissa, Avshalom**
**71272 Renningen (DE)**

(56) Entgegenhaltungen:
WO-A-89/11409          WO-A-90/09301
DE-A- 3 518 221          DE-A- 3 731 756
DE-A- 4 018 495          DE-A- 4 026 626
DE-C- 4 226 746          US-A- 5 188 434

• A. VAN ZANTEN: "FDE - Die Fahrdynamik-regelung von Bosch " ATZ AUTOMOBILTECHNISCHE ZEITSCHRIFT, Bd. 96, Nr. 11, November 1994 (1994-11), Seiten 674-689, XP002900496

EP 0 943 515 B1

**Beschreibung**

Die Erfindung betrifft ein Verfahren zur Regelung des Gierverhaltens von Fahrzeugen unter Verwendung eines Lenkreglers und eines Bremsreglers nach dem Oberbegriff von Anspruch 1.

Ein Bremsregler ist beispielsweise aus dem Artikel "FDR - Die Fahrdynamikregelung von Bosch" in ATZ Automobiltechnische Zeitschrift 95 (1994) 11, S. 674 ff. bekannt. Gemäß diesem Artikel wird in einem Fahrdynamikregler aus der Fahrzeuggeschwindigkeit und dem Lenkwinkel ein Sollwert für die Giergeschwindigkeit des Fahrzeugs ermittelt. Dazu wird ein Einspurmodell des Fahrzeugs verwendet. Ferner wird durch einen Sensor ein Istwert für die Giergeschwindigkeit ermittelt. Die Differenz zwischen Istwert und Sollwert für die Giergeschwindigkeit wird ermittelt und daraus die Regelabweichung abgeleitet. Hieraus wird ein Eingriff in die Radbremsen abgeleitet, der das Fahrzeug stabilisiert.

Ferner ist aus der DE 42 26 746 C1 ein Lenkregler bekannt, bei dem in Abhängigkeit des Gierverhaltens das Fahrverhalten eines Fahrzeugs durch Eingriff in die Lenkung beeinflusst wird.

Die Regelung des Gierverhaltens von Fahrzeugen unter gleichzeitiger Verwendung eines Lenkreglers und eines Bremsreglers ist aus der gattungsgemäßen US 5,634,698 bekannt. Bei diesem, einen Bremsregler und einen Lenkregler umfassenden Fahrdynamikregelsystem wird beiden Reglern die Abweichung, die zwischen dem Sollwert und dem Istwert der Giergeschwindigkeit vorliegt, zugeführt. In Abhängigkeit dieser Abweichung werden vom Bremsregler Werte für die einzustellenden Bremsdrücke und vom Lenkregler ein Wert für den einzustellenden Lenkwinkel ermittelt. Bei diesem Fahrdynamikregelsystem wird eine geeignete Gewichtung für die Lenkung und die Bremsung durchgeführt. Hierzu wird zunächst ein Faktor d_K3_BRG für die Bremsung ermittelt. Aus diesem wird mit Hilfe der Gleichung d_K3 = 1 - d_K3_BRG ein Faktor d_K3 für die Lenkung ermittelt. Der vom Lenkregler ermittelte Sollwert $\Delta\delta hs$ für den einzustellenden Lenkwinkel wird mit dem Faktor d_K3 multipliziert, wodurch sich ein neuer, gewichteter Sollwert $\Delta\delta^*hs$ für den einzustellenden Lenkwinkel ergibt. Entsprechend werden die vom Bremsregler ermittelten Sollwerte $\Delta Pis$ für die einzustellenden Bremsdrücke bzw. $\Delta\lambda is$ für die einzustellenden Schlupfwerte mit dem Faktor d_K3_BRG multipliziert, wodurch sich neue, gewichtete Sollwerte $\Delta P^*is$ für die einzustellenden Bremsdrücke bzw. $\Delta\lambda^*is$ für die einzustellenden Schlupfwerte ergeben. Durch diese Vorgehensweise wird eine Gewichtung zwischen den Eingriffen in die Lenkung und den Eingriffen in die Bremsen erreicht.

Die in der US 5,634,698 beschriebene Vorgehensweise hat jedoch folgenden entscheidenden Nachteil: Dadurch dass die Ermittlung der beiden Faktoren d_K3 und d_K3_BRG unter Verwendung der Gleichung d_K3 = 1 - d_K3_BRG erfolgt, können diese beiden Faktoren nicht eigenständig ermittelt werden. Sobald eine Gewichtung für den Bremsregler (Faktor d_K3_BRG) vorgenommen wird, wird gleichzeitig auch eine Gewichtung für den Lenkregler (Faktor d_K3) vorgenommen. Wird beispielsweise der Einfluss des Bremsreglers vergrößert, so wird gleichzeitig der Einfluss des Lenkreglers verkleinert. Es ist nicht vorgesehen, dass das Verhalten des Bremsreglers mittels eines Gewichtungsfaktors beeinflusst wird, während das Verhalten des Lenkreglers unverändert bleibt. Die gekoppelte Beeinflussung des Bremsreglers und des Lenkreglers, d.h. die Tatsache, dass die beiden Faktoren nicht eigenständig ermittelt werden und somit die beiden Regler nicht eigenständig beeinflusst werden können, ermöglicht keine optimale Ausnutzung der möglichen, auf die Fahrbahn übertragbaren Kräfte und somit auch nicht eine optimale Stabilisierung des Fahrzeugs in kritischen Fahrsituationen.

Aufgabe der Erfindung ist es somit, in kritischen Fahrsituationen das Fahrzeug soweit wie möglich beherrschbar zu machen und gleichzeitig den Bereich beherrschbarer kritischer Fahrsituationen soweit möglich auszudehnen.

Diese Aufgabe wird bei einem gattungsgemäßen Verfahren erfindungsgemäß mit den kennzeichnenden Merkmalen des Anspruchs 1 gelöst, wobei die Merkmale der Unteransprüche vorteilhafte Aus- und Weiterbildungen kennzeichnen.

Zur Regelung des Gierverhaltens des Fahrzeugs wird aus dem vom Fahrer vorgegebenen Lenkwinkel und einer ermittelten Fahrzeuggeschwindigkeit ein Sollwert für die Giergeschwindigkeit des Fahrzeugs ermittelt. Ein Istwert der Giergeschwindigkeit wird ebenfalls ermittelt. Aus der Differenz zwischen Istwert und Sollwert der Giergeschwindigkeit wird dann die Regelabweichung abgeleitet. Diese Regelabweichung wird dann zwei unabhängig voneinander arbeitenden Reglern zugeführt. In dem einen Regler, dem Lenkregler, wird ein Sollwert für den Radlenkwinkel gelenkter Räder ermittelt, während in dem anderen Regler, dem Bremsregler, ein Sollwert für die Änderung des Bremsdrucks gebremster Räder ermittelt wird. Unter Berücksichtigung dieses Wertes wird dann ein Sollbremsdruck ermittelt. Sowohl der Lenkregler als auch der Bremsregler ermitteln die jeweiligen Sollwerte unabhängig voneinander. Über den Fahrzeugrädern individuell zugeordnete Bremsdruckstellglieder wird in den Radbremszylindern der zugehörige Sollbremsdruck und über Lenkstellglieder an den gelenkten Rädern der zugehörige Radlenkwinkel eingestellt. Durch einen festlegbaren Gewichtungsfaktor ist der Einfluss des Bremsreglers auf das Fahrzeug im Verhältnis zum Lenkregler bestimmbar, wobei der Gewichtungsfaktor das Verhalten des Bremsreglers beeinflusst und das Verhalten des Lenkreglers unverändert bleibt.

Dadurch dass durch den Gewichtungsfaktor das Verhalten des Bremsreglers beeinflusst wird, während das Verhalten des Lenkreglers unverändert bleibt, wird erreicht, dass die Grundregelung mit Hilfe eines Lenkreglers realisiert wird und diese durch Eingriffe eines Bremsreglers unterstützt wird. Hierdurch wird die Lenkbarkeit des Fahrzeugs auf einen größeren Bereich von Fahrzuständen erweitert. Die Regelgüte des Lenkverhaltens wird verbessert, die Anpassung des Istverhaltens an das Sollverhalten des Fahrzeugs erfolgt schneller und mit geringeren Regelabweichungen.

Ein weiterer vorteilhafter Aspekt der Erfindung ist, dass durch die Unabhängigkeit der beiden Regler Redundanz durch Diversität geschaffen wird. Beim Ausfall eines der beiden Regler steht immer noch der andere zur Regelung des Gierverhaltens des Fahrzeugs zur Verfügung. Dabei ist keine Fehlererkennung notwendig, die auftretenden Fehler werden, so weit physikalisch möglich, selbständig kompensiert. Insbesondere kann dadurch über die Bremse weiterhin "gelenkt" werden, wenn der Regler der Lenkung ausfällt.

Weitere zweckmäßige Ausgestaltungen der Erfindung können auch noch den Unteransprüchen entnommen werden; im übrigen ist die Erfindung an Hand eines in der Zeichnung dargestellten Ausführungsbeispieles nachfolgend noch erläutert; dabei zeigen:

Fig. 1      eine schematische Darstellung eines Fahrzeugs mit den Stellgliedern;
Fig. 2      das Blockschaltbild eines erfindungsgemäßen Verfahrens;
Fig. 3      den Verlauf den Regeleingriff charakterisierender Kurven verschiedener Größen,
Fig. 4      eine Methode zur Bestimmung der Verstärkung des Bremsdruckreglers in Abhängigkeit von vom Fahrer vorgegebenen Größen,
Fig. 5      das Blockschaltbild eines zweiten erfindungsgemäßen Verfahrens,
Fig. 6      das Blockschaltbild eines dritten erfindungsgemäßen Verfahrens, sowie
Fig. 6a     die Zuordnungsfunktion zwischen Schwellenwertanpassung und Sollwert der Änderung des Bremsdrucks für einen ABS-Regler.

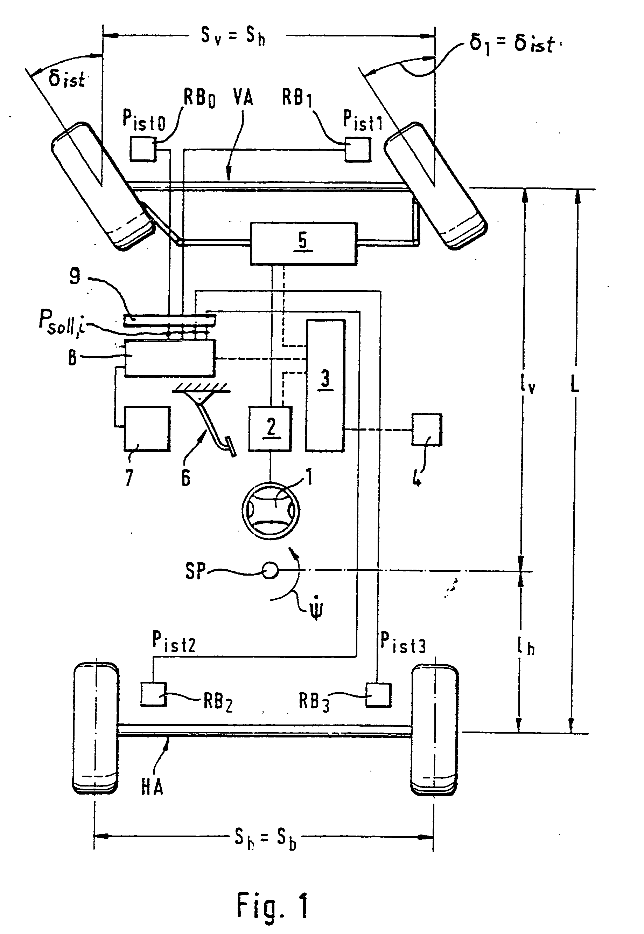

In der Fig. 1 ist in schematischer Darstellung ein Fahrzeug gezeigt, das zur Durchführung der Erfindung geeignet ist. Es handelt sich um ein zweiachsiges Fahrzeug, das an seiner Vorderachse gelenkt ist und das an allen vier Rädern unabhängig voneinander steuerbare Radbremsen aufweist (das sind also vier Gruppen von gebremsten Rädern, wobei jede der Gruppen aus einem gebremsten Rad besteht; Gruppen von Rädern deren Bremsdruck gemeinsam angesteuert werden kann können beispielsweise bei Nutzfahrzeugen mit Nachlaufachsen gebildet werden, wenn die Radbremsen der Räder der gleichen Fahrzeugseite von Nachlaufachse und Hinterachse mit dem gleichen Bremsdruck versorgt werden).

Das Fahrzeug hat um den Schwerpunkt SP die Giergeschwindigkeit $\dot{\Psi}$. Der Abstand zwischen der gelenkten Vorderachse VA und der nicht gelenkten Hinterachse HA ist mit L, der Abstand zwischen Schwerpunkt SP und Vorderachse VA ist mit $l_v$ und der Abstand zwischen Schwerpunkt und Hinterachse HA ist mit $l_h$ bezeichnet. Das Fahrzeug weist eine Lenkeinrichtung 1 auf, mittels der der Fahrer einen Lenkwinkel $\delta$ vorgeben kann. In einem Sensor 2 wird der Lenkwinkel $\delta$ erfaßt und der Steuereinheit 3 zugeführt. Über den Sensor 4 wird der Istwert $\dot{\Psi}_{ist}$ der Giergeschwindigkeit erfaßt und der Steuereinheit 3 zugeführt. Diese ermittelt einen Sollwert für den Radlenkwinkel $\delta_{soll}$, der durch den Lenksteller 5 an den beiden gelenkten Rädern der Vorderachse VA eingestellt wird. Die von dem Fahrer an dem Bremspedal 6 aufgebrachte Bremskraft wird in einem Bremskraftverstärker und Hauptbremszylinder 7 in einen Bremsdruck $P_{fahrer}$, gewandelt, der der Bremssteuereinrichtung 8 zugeführt wird. In der Bremssteuereinrichtung 8 kann für jeden der Radbremszylinder $RB_0,...,RB_3$ unabhängig von den anderen Radbremszylindern ein Differenzdruck $\Delta P_i$ beaufschlagt werden und so ein Sollbremsdruck $P_{soll,0},...,P_{soll,3}$ erzeugt werden. Um unabhängig von der Bremsdruckerzeugung durch den Fahrer zu sein ist eine Bremsdruckerzeugungseinheit 9 vorgesehen, die es erlaubt in den Radbremszylindern $RB_0,...,RB_3$ einen Bremsdruck zu erzeugen. Die Bremssteuereinrichtung 8 wird ebenfalls von der Steuereinheit 3 angesteuert, wobei in der Steuereinheit 3 die Sollwerte $DP_1$ für die Änderung des Bremsdrucks ermittelt werden.

Als Beispiel wird für den Fall des vorstehend beschriebenenen Fahrzeugs nachfolgend ein Fahrzeugmodell und die sich daraus ergebenden Regelgleichungen hergeleitet, die es erlauben das erfindungsgemäße Verfahren durchzuführen. Dabei werden die am Ende der Beschreibung in der Aufstellung "Formelzeichen" angegebenen Formelzeichen verwendet. Weist das Fahrzeug andere Voraussetzungen auf - beispielsweise können beide Achsen des Fahrzeugs gelenkt oder die Bremsdrücke nicht für alle Räder unabhängig voneinander veränderbar sein - so können in analoger Vorgehensweise die dann erforderlichen Regelgleichungen hergeleitet werden.

Wird das Fahrzeug in fahrzeugfesten Koordinaten beschrieben, so ergeben sich die folgenden Bewegungsgleichungen für die Längsund Quergeschwindigkeiten sowie die Giergeschwindigkeit :

$$\dot{v}_x=\frac{1}{m}\{-(S_0+S_1)\sin\delta+(U_0+U_1)\cos\delta+U_2+U_3\}+v_y\cdot\dot{\Psi} \tag{1}$$

$$\dot{v}_y = \frac{1}{m}\{(S_0 + S_1)\cos\delta + (U_0 + U_1)\sin\delta + S_2 + S_3\} - v_x \cdot \dot{\Psi} \qquad (2)$$

$$\ddot{\Psi} = \frac{1}{I_z} \left\{ \left[ (S_0 - S_1)s_v \div (U_0 + U_1)l_v \right] \sin\delta + \right.$$

$$\left[ (S_0 + S_1)l_v - (U_0 - U_1)s_v \right] \cos\delta -$$

$$\left. (S_2 \div S_3)l_h - (U_2 - U_3)s_h \right\} \qquad (3)$$

Man kann diese Gleichungen dadurch linearisieren, daß man annimmt der Lenkwinkel $\delta$ sei klein und daher gilt, daß

$$\sin\delta \approx 0 \; und \; \cos\delta \approx 1.$$

Werden achsweise die linken und rechten Seitenkräfte zusammengefaßt und wird die Differenz der Umfangskräfte zwischen den Rädern gleicher Fahrzeugseiten gebildet und wird ferner angenommen, die Spurweite des Fahrzeugs sei an allen Achsen gleich, so läßt sich die Differentialgleichung für die Giergeschwindigkeit $\dot{\Psi}$ so ausdrücken:

$$\ddot{\Psi} = \frac{1}{I_z} \left( \left[ S_v \cdot l_v - S_h \cdot l_h \right] \div \Delta U \cdot s_b \right). \qquad (4)$$

Dies ist die Differentialgleichung eines Einspurmodells des Fahrzeugs, wie es detailliert auch in A. Zomotor "Fahrwerktechnik, Fahrverhalten" in J. Reimpell (Hrsg) 1. Auflage, insbesondere Seiten 99 ff. beschrieben ist.

Zur Regelung des Fahrzeugs mittels des Radlenkwinkels wird diese Gleichung weiter durch die Annahme vereinfacht, daß die Umfangskraftdifferenz DU vernachlässigt wird. Die Annahme DU=0 ist dann richtig, wenn an beiden Fahrzeugseiten die gleiche Umfangskraft übertragen wird und kein Einzelbremsregler in die Strecke eingreift. Die sich daraus ergebende Gleichung wird dadurch vereinfacht, daß die Seitenkraft hinten $S_h$ mittels der Gleichung $S_h = m \cdot a_y - S_v$ eliminiert und der Abstand L zwischen den Achsen verwendet wird. Man erhält schließlich den Ausdruck

$$\ddot{\Psi} = \frac{1}{I_z} \left( S_v \cdot L - l_h m a_y \right)$$

für die Differentialgleichung der Giergeschwindigkeit. Für die Gierbeschleunigung soll aber nun gelten, daß

$$\ddot{\Psi} = \ddot{\Psi}_{soll} - \lambda e \, ,$$

wenn mann mit e die Regelabweichung $e = \dot{\Psi} - \dot{\Psi}_{soll}$ bezeichnet. Aus den letzten beiden Ausdrücken für die Gierwinkelbeschleunigung läßt sich die vom Lenkwinkel abhängige mathematische Stellgröße $S_{V,soll}$ isolieren. Man erhält

$$S_{v,soll} = \frac{l_h m a_y}{L} \div \frac{I_z}{L} \left( \ddot{\Psi}_{soll} - \lambda e \right). \qquad (5)$$

Die mathematische Stellgröße Seitenkraft $S_{v,soll}$ muß nun noch in die physikalische Stellgröße Radlenkwinkel $\delta_{soll}$ umgerechnet werden. Dazu nimmt man an, daß sich die Seitenkraft vorne $S_v$ im linearen Bereich ihrer Abhängigkeit vom Schräglaufwinkel vorne $a_v$ befindet und der Einfluß des Längsschlupfes $l_U$ vernachlässigt werden kann. Mit diesen

Annahmen kann $S_v$ näherungsweise über einen proportionalen Zusammenhang in $a_v$ umgerechnet werden:

$$\alpha_{v.soll} = \frac{S_{v.soll}}{C_s} \tag{6}$$

Der Radlenkwinkel $\delta_{soll}$ berechnet sich aus der Gleichung

$$\alpha_v = \delta_{soll} + \beta - \frac{\dot{\Psi} \cdot l_h}{v_x} \tag{7}$$

Diese Gleichung muß nur noch nach dem Radlenkwinkel $\delta_{soll}$ aufgelöst werden. Der Schwimmwinkel b muß geschätzt werden, ein geeignetes Verfahren zur Schätzung des Schwimmwinkels ist beispielsweise aus der DE 43 34 423 C2 bekannt. Weitere Korrekturterme können eingefügt werden, um dem Einfluß des Einlaufverhaltens der Radkräfte, die Einflüsse von Lenkung und Aktuatoren sowie die Einflässe der Fehler und Störungen zu berücksichtigen. Man erhält somit den Ausdruck:

$$\delta_{soll} = \alpha_{v,soll} + \frac{l_v \dot{\Psi}}{v_x} - \beta + \textit{Korrekturterme} \tag{8}$$

Die vorstehend gemachten Linearisierungen und Annahmen sind nur für kleine Schräglaufwinkel $a_v$ gültig. Ein zu großer Schräflaufwinkel $a_v$ ist aber auch nicht erwünscht, da er die Seitenkraft des Rades auf den Untergrund nicht mehr erhöht. Aus diesem Grund kann der Schräglaufwinkel dadurch begrenzt werden, daß zunächst der Schräglaufwinkel ermittelt wird, der sich aus dem berechneten Sollwert des Radlenkwinkels $\delta_{soll}$ ergibt. Überschreitet dieser Wert ein Maximum $a_{max}$, so kann ein neuer Sollwert $\delta_{soll}^*$ ermittelt werden, der so bestimmt ist, daß das Maximum $a_{max}$ nicht überschritten ist. Alternativ hierzu kann auch die Abweichung Dd des Radlenkwinkels $d_{soll}$ von dem Rad-lenkwinkel $d_{soll}$ (m=1), der erforderlich ist, um bei einem Kraftschlußbeiwert m=1 die Sollgiergeschwindigkeit $\dot{\Psi}_{soll}(\delta)$ zu erreichen, die sich aus dem vom Fahrer vorgegebenen Lenkwinkel d ergibt, auf einen Wert zwischen 5° und 10° begrenzt sein. Ferner kann zusätzlich die Änderungsgeschwindigkeit $\dot{\delta}_{soll}$ des Lenkwinkels auf ein Maximum begrenzt werden. Das Maximum ist dabei durch die Eigenschaften des Lenkstellers vorgegeben. Um ruckartigen Radlenkwinkelsprüngen vorzubeugen werden die so erhaltenen Werte noch mit einem Tiefpaßfilter gefiltert.

Nachfolgend wird nun ein Giergeschwindigkeitsregler beschrieben, bei dem die vier unabhängig voneinander regelbaren Bremsdrücke $P_i$, i= 0,1,..,3 als Stellgröße benutzt werden. Ausgehend von der Gleichung (3) wird ein Mehrgrößenregler dargestellt, dessen einzige Regelgröße die Giergeschwindigkeit $\dot{\Psi}$ ist, es ist also ein sogenannter single input multiple output (SIMO) Regler. Die am Rad von der Bremse zu erzeugenden Umfangskräfte können mit der Gleichung

$$U_i = \frac{P_i K_{Pi}}{r_{eff}} \tag{9}$$

in Sollbremsdrücke umgerechnet werden. Dabei ist $K_{pi}$ ein Verstärkungsfaktor, der umgekehrt proportional zu der Wirkfläche des Drucks auf das Rad ist, $r_{eff}$ ist der effektive Radius des Rades. Die Seitenkräfte sind in Abhängigkeit von Schräflaufwinkel $a_i$ und Längsschlupf $l_i$ gekoppelt. Es wird hier nun die Annahme getroffen, daß die Seitenkräfte und damit auch die Kopplung zwischen Seitenkräften S und Umfangskräften U vernachlässigbar sind, also $S_i=0$ gilt. Unter dieser Annahme und unter Verwendung der Gleichung (9) ergibt sich aus der Gleichung (3) der Ausdruck

$$\ddot{\Psi} = \left(P_0 + P_1\right)\frac{l_v K_{P,v}}{r_{eff} I_z}\sin\delta + \left(P_0 - P_1\right)\frac{s_b K_{P,v}}{r_{eff} I_z}\cos\delta + \left(P_2 - P_3\right)\frac{s_b K_{Ph}}{r_{eff} I_z} \tag{10}$$

für die Differentialgleichung der Giergeschwindigkeit. Diese Gleichung ist nichtlinear im Lenkwinkel $\delta$. Aus diesem Grund wird sie um einen Arbeitspunkt AP linearisiert, es gilt

$$\ddot{\Psi} - \ddot{\Psi}_{AP} = \frac{\partial \ddot{\Psi}}{\partial \dot{\Psi}}\left(\dot{\Psi} - \dot{\Psi}_{AP}\right) + \sum_{i=0}^{3} \frac{\partial \ddot{\Psi}_i}{\partial P_i}\left(P_i - P_{APi}\right),$$

woraus sich die lineare Gleichung in vektorieller Form

$$\Delta \ddot{\Psi} = 0\Delta \dot{\Psi} + \left( \left(l_v \sin\delta_{AP} + s_v \cos\delta_{AP}\right)\frac{K_{pv}}{rI_z}, \quad \left(l_v \sin\delta_{AP} - s_v \cos\delta_{AP}\right)\frac{K_{pv}}{r_{eff}I_z}, \quad \frac{s_h K_{ph}}{r_{eff}I_z}, \quad -\frac{s_h K_{ph}}{r_{eff}I_z} \right) \cdot \begin{pmatrix} \Delta P_0 \\ \Delta P_1 \\ \Delta P_2 \\ \Delta P_3 \end{pmatrix}$$

mit

$$\Delta \ddot{\Psi} = \ddot{\Psi} - \ddot{\Psi}_{AP}$$

$$\Delta \dot{\Psi} = \dot{\Psi} - \dot{\Psi}_{AP}$$

$$\Delta P_i = P_i - P_{APi}$$

ergibt, die zu Mehrgrößenreglerentwürfen geeignet ist. Mehrgrößenregler sind allgenein bekannt und es besteht eine Vielzahl möglicher Entwürfe zur Ermittlung der Regelgleichungen. Die den Arbeitspunkt beschreibenden Größen $\dot{\Psi}_{AP}, \ddot{\Psi}_{AP}$ werden hierbei durch die Sollwerte $\dot{\Psi}_{soll}$ und $\ddot{\Psi}_{soll}$ ersetzt. Im Rahmen dieser beispielhaften Beschreibung eines Reglers wird auf einen sogenannten LQR-Entwurf (Linear-quadratischer Regler)zurückgegriffen. Hierzu wird für die lineare Regelstrecke ein quadratisches Gütekriterium der Form

$$I(\vec{x}, \vec{u}) = \int_{0}^{\infty} \left\{ \vec{x}^T(t)Q\vec{x}(t) + \vec{u}^T(t)R\vec{u}(t) \right\} dt$$

minimiert.Q und R sind dabei symmetrische, positiv semidefinite bzw. positiv definite Gewichtungsmatrizen. Die Aufstellung der Regelgesetze kann durch Lösung einer algebraischen Riccatigleichung erfolgen. Da hier nur die Giergeschwindigkeit $\dot{\Psi}$ geregelt wird, ist die Riccatigleichung skalar. Führt man diese Berechnungen aus, so erhält man das Rückführungsgesetz

$$\Delta P_i = -K_{LQR}(AP)\Delta \dot{\Psi}, \tag{11}$$

wobei die Verstärkung $K_{LQR}(AP)$ vom Arbeitspunkt abhängig ist und dessen Ausdruck unter den vorstehend gemachten Voraussetzungen

$$K_{LQR} = \sqrt{\frac{q/r}{\sum_{k=0}^{3} g_k}} g_i \tag{12}$$

lautet, wobei

$$g_0 = \left(\frac{K_{P,v} l_v}{r}\right) \sin \delta - \left(\frac{K_{P,v} s_b}{r}\right) \cos \delta \quad g_1 = \left(\frac{K_{P,v} l_v}{r}\right) \sin \delta \div \left(\frac{K_{P,v} s_b}{r}\right) \cos \delta$$
$$g_2 = -\frac{K_{P,h} s_b}{r} \qquad\qquad g_3 = \frac{K_{P,h} s_b}{r} \tag{13}$$

und q/r eine Konstante ist. Die Konstante q/r ergibt sich dabei wie folgt: die Gewichtungsmatrix Q reduziert sich für den betrachteten Fall des SIMO-Reglers auf das Skalar q. Der Robustheitskriterien wegen wurde die Gewichtungsmatrix als diagonale Matrix gewählt. Alle diagonalen Matrixelemente erhielten die gleiche Gewichtung r, da allen Rädern die gleiche Eingriffsmöglichkeit zugebilligt wird. Die Konstante q/r wird nachfolgend als Verstärkungsfaktor q/r bezeichnet.

Zur Verbesserung der dynamischen Eigenschaften wird nun noch ein D-Glied in den P-Regler eingeführt. Man erhält dann die Bremsdruckänderung

$$\Delta P_i = -K_{LQR}(AP)\left(\Delta\dot\Psi + K_D \Delta\ddot\Psi\right) \tag{14}$$

Die Freiheitsgrade in dem Reglerentwurf sind neben dem D-Anteil $K_D$ die Werte der Gewichtungsmatrizen Q und R, also die Werte q und r. Da diese nur als Quotient in der Verstärkung $K_{LQR}$ enthalten sind, genügt es einen der beiden Werte zu variieren und den anderen konstant zu halten. Die Schnelligkeit der Regelung der Radbremsdrücke hat dabei auch einen Einfluß auf die Lenkregelung. Die erforderlichen Lenkeingriffe werden um so geringer, je schneller über die Radbremsen geregelt wird, da beide Regelungen in sich ergänzender Weise wirken. Dabei ist jedoch zu beachten, daß in der Regel aufgrund konstruktiver Gegebenheiten eine hydraulische Bremsanlage eine größere Trägheit aufweist, als ein Lenksteller und daß in der Regel beim Lenken nur ein geringer Bremseingriff erfolgen soll.

Desweiteren ist zu beachten, daß die Stellgröße Bremsdruck $P_i$ noch begrenzt werden muß. Negative Werte und große positive Werte, die über den physikalisch möglichen Bremsdrücken liegen, sind nicht sinnvoll, sie werden daher auf null bzw. den maximal ereichbaren Bremsdruck gesetzt. Auch die zeitliche Druckänderung kann physikalisch nicht beliebig groß sein. Der Absolutwert der Ableitung $\dot P_i$ ist also auf einen Maximalwert, $\dot P_{max}$ begrenzt, der sich aus den konstruktiven Gegebenheiten der Bremsanlage ergibt. Um die durch die Begrenzung unregelmäßig gewordenen Druckverläufe zu glätten kann ein Tiefpaßfilter der Begrenzung nachgeschaltet werden, bevor die Bremsdruckwerte auf die Regelstrecke gegeben werden.

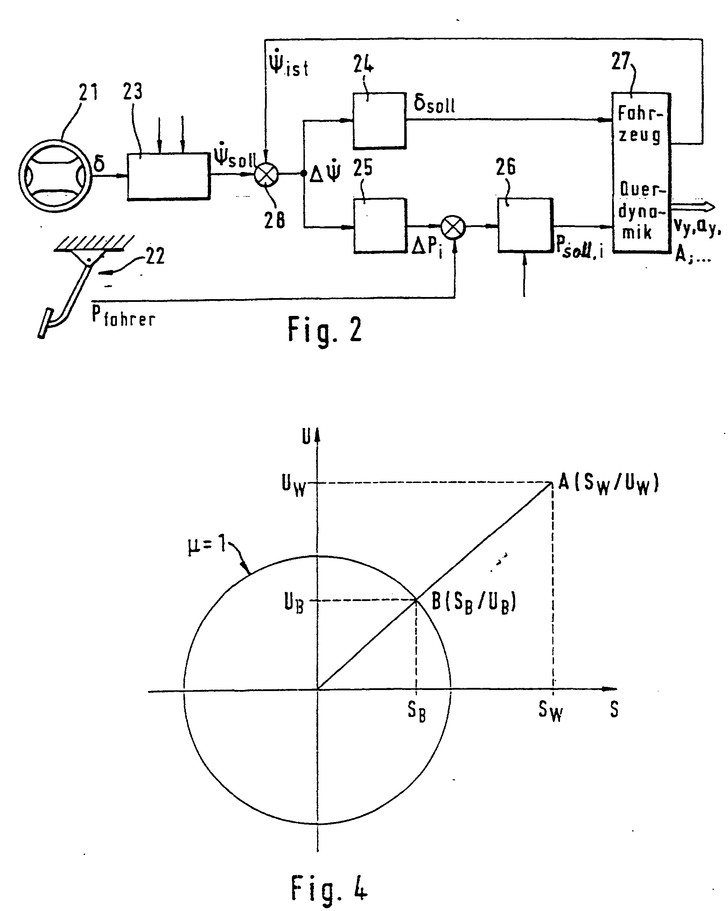

Die Fig. 2 zeigt das Blockschaltbild eines erfindungsgemäßen Verfahrens. Mittels des Lenkrads 21 gibt der Fahrer den Lenkwinkel δ vor. In dem Sollwertgeber 23 wird aufgrund des Lenkwinkels und der Fahrzeuggeschwindigkeit $v_x$ und unter Verwendung einer geeigneten Übertragungsfunktion ein Sollwert $\dot\Psi_{soll}$ für die Giergeschwindigkeit ermittelt. Aus dem Sollwert $\dot\Psi_{soll}$ und dem Istwert $\dot\Psi_{ist}$ wird die Regelabweichung $\Delta\Psi$ im Vergleicher 28 ermittelt. Die Regelabweichung wird sowohl dem Lenkregler 24 als auch dem Bremsregler 25 zugeführt. Im Lenkregler 24 wird wenigstens ein Sollwert $d_{soll}$ für den Radlenkwinkel ermittelt. Über das Bremspedal 22 gibt der Fahrer einen Bremsdruck $P_{fahrer}$ vor. Dieser wird mit den im Bremsregler ermittelten Sollwerten $DP_i$ für die Änderung des Bremsdrucks verknüpft und dem ABS-Regler 26 zugeführt. Im ABS-Regler wird dann der Sollbremsdruck $P_{soll,i}$ ermittelt, der an den gebremsten Rädern erzeugt werden soll.

Dabei wird der Sollbremsdruck $P_{soll}$ noch dahingehend begrenzt, daß ein für die Räder individuell oder gruppenweise oder auch achsweise vorgegebener Schlupfschwellenwert $g_{Schlupf}$ nicht überschritten wird . Der ermittelte Sollwert für den Radlenkwinkel $\delta_{soll}$ sowie der Sollbremsdruck $P_{soll,i}$ werden durch Steller im Fahrzeug eingeregelt. Im Fahrzeug wird der Istwert $\dot\Psi_{ist}$ der Giergeschwindigkeit ermittelt und dem schon erwähnten Vergleicher 28 zugeführt.

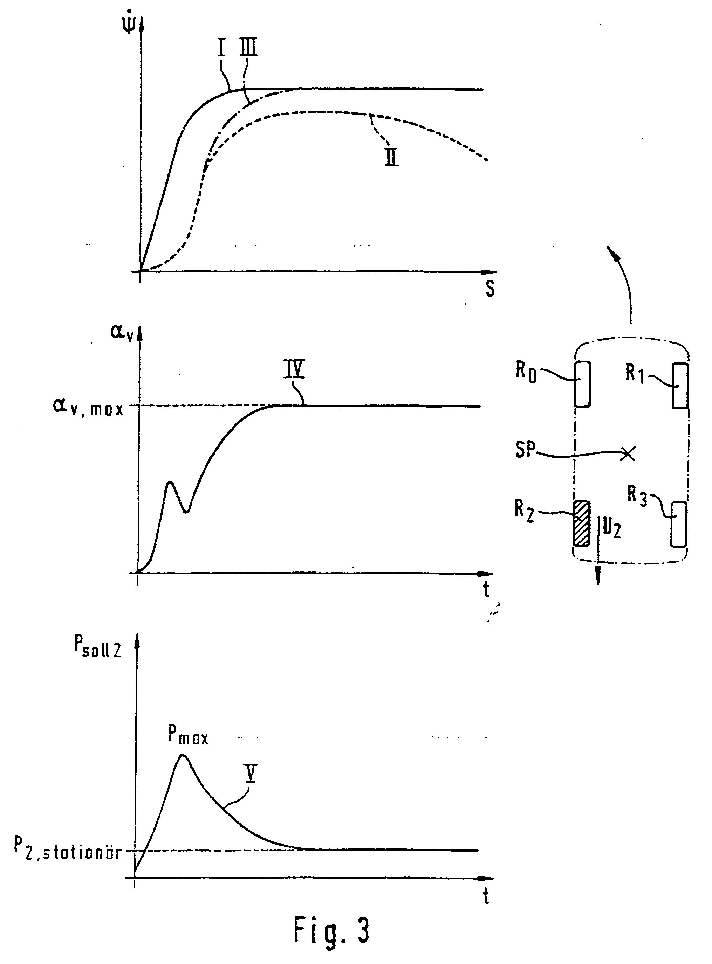

Die Fig. 3 zeigt für den Fall des Einlenkens in eine Linkskurve den Verlauf unterschiedlicher Kurven in Abhängigkeit von der Zeit t, wenn ein niedriger Kraftschlußbeiwert (z.B. Eis) vorliegt und aus diesem Grund der Sollwert der Giergeschwindigkeit durch Lenken allein nicht ist. Auf der rechten Seite ist schematisch das Fahrzeug mit den vier Rädern $R_0,...,R_3$ dargestellt, wobei das schraffierte, linke Hinterrad $R_2$ während des Regelungsvorgargs gebremst wird, wodurch die Umfangskraft $U_2$ erzeugt wird. In der Mitte des Fahrzeugs ist der Schwerpunkt SP dargestellt. Im obersten der drei Diagramme sind drei Kurven I, II, III dargestellt. Die mit durchgezogenem Strich gezeichnete Kurve I stellt den Verlauf des Sollwerts $\dot\Psi_{soll}$ der Giergeschwindigkeit dar, wie er sich aus dem vom Fahrer vorgegebenden Lenkwinkel δ ergibt. Die Kurve II, die gestrichelt dargestellt ist, zeigt den Verlauf des Istwertes $\dot\Psi_{ist}$ der Gierwinkelgeschwindigkeit, wenn man annimmt daß nur eine Regelung der Lenkung stattfindet, die jedoch aufgrund des zu geringen Kraftschlußbeiwertes nicht genügt, dem Fahrzeug das gewünschte Gierverhalten zu ermöglichen. Die Strichpunktierte Kurve III zeigt den Verlauf, wenn zusätzlich zur Regelung des Lenkwinkels auch eine Regelung des Bremsdrucks erfolgt. Im Falle einer ansonsten ungebremsten Fahrt des Fahrzeugs erfolgt der Bremseingriff am kurveninneren Hinterrad, hier also am hinteren, linken Rad $R_2$. In der darunterliegenden Kurve IV ist im gleichen Zeitablauf wie bei den Kurven I bis III der Verlauf des Schräglaufwinkels $a_v$ an den Rädern der Vorderachse dargestellt.

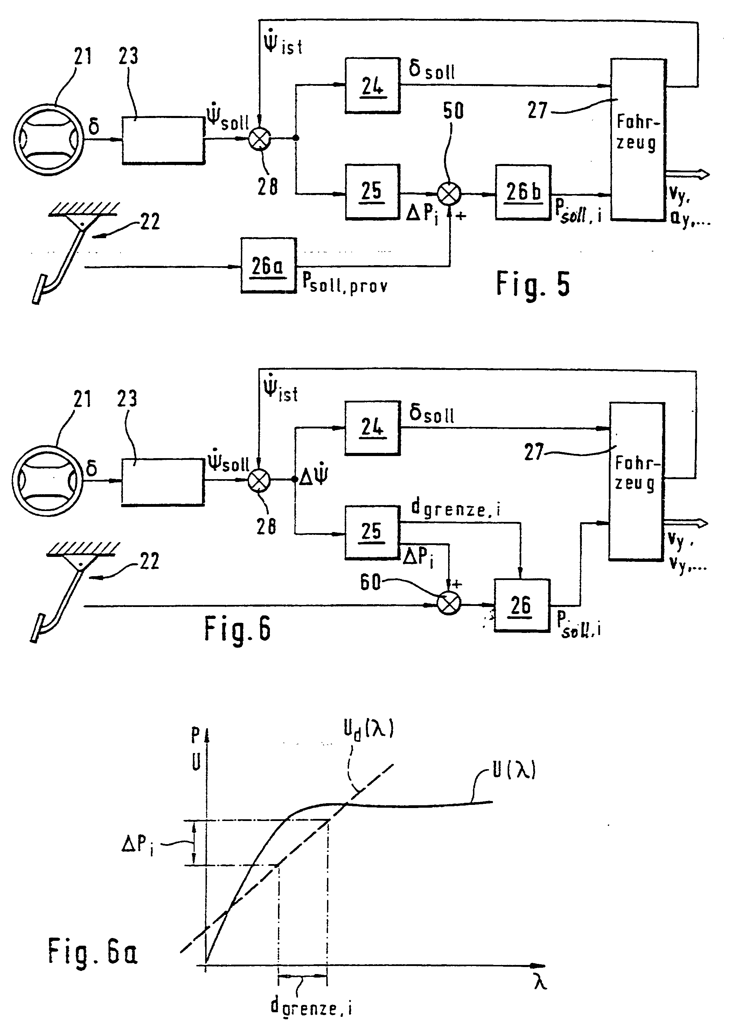

In der Fig. 4 ist eine Methode dargestellt, die es erlaubt, das Verhältnis der Werte r und q, deren Quotient in die Verstärkung $K_{LQR}$ zur Berechnung der Änderung des Bremsdrucks $DP_i$ eingeht, zu ermitteln. Dazu wird zunächst aus der Sollgiergeschwindigkeit $\dot{\Psi}_{soll}$, die aus dem vom Fahrer eingestellten Lenkwinkel d ermittelt wurde, ein Seitenkraftwunsch $S_W$ abgeleitet. Aus dem vom Fahrer erzeugten Bremsdruck $P_{fahrer}$ wird ein Wert für die Umfangskraft $U_W$ abgeleitet. Liegt der vom Fahrer gewünschte Wert außerhalb des physikalisch Möglichen, so wird mittels der Methode des Kamm'schen Kreises ein physikalisch möglicher Wert der Seitenkraft S und Umfangskraft U ermittelt, der dem Fahrerwunsch nahekommt. Dazu wird - in einem Koordinatensystem mit der Seitenkraft S bzw. der Umfangskraft U als Koordinatenachsen - der Schnittpunkt B ($S_B|U_B$) ermittelt, der entsteht, wenn die Ursprungsgerade durch den Punkt A ($S_W|U_W$) den Kreis K schneidet, der den Bereich physikalisch möglicher Wertepaare von S und U begrenzt. Der Radius des Kreises K ist vom Kraftschlußbeiwert m abhängig. Der Betrag von m kann entweder mittels bekannter Verfahren beispielsweise aus den Raddrehzahlen geschätzt werden oder man verwendet standardmäßig den Einheitskreis, geht also von m=1 aus. Mittels den so ermittelten Werten $S_B$ und $U_B$ - oder falls die Werte $S_W$ und $U_W$ im Bereich des physikalisch Möglichen lagen, mit diesen Werten - wird aus einem Kennfeld der Wert des Quotienten q/r abgeleitet. Dadurch ist dann auch die Verstärkung $K_{LQR}$(AP) bekannt. Grundsätzlich hat das Kennfeld die Eigenschaft, daß der Verstärkungsfaktor q/r mit zunehmender Seitenkraft S steigt und mit zunehmender Umfanskraft U fällt. Gleichzeitig kann aus den Werten $S_W$ und $U_W$ für Seitenkraft und Umfangskraft auch eine Schräglaufwinkelgrenze und eine Schlupfgrenze aus entsprechenden Kennlinien hergeleitet werden, die dem Wunsch des Fahrers entspricht.

Die Fig. 5 zeigt das Blockschaltbild eines zweiten erfingungsgemäßen Verfahrens. Bei diesem Verfahren soll im Unterschied zum ersten Verfahren verhindert werden, daß aufgrund der Begrenzung des Sollbremsdrucks $P_{soll}$ durch die ABS-Regelung der Einfluß des Sollwertes DP für die Änderung des Bremsdrucks "verloren" geht. Dies geschieht im wesentlichen dadurch, daß zwei ABS-Regler 26a, 26b vorgesehen sind, wobei die vorgegebenen Schlupfschwellenwerte $g_{Schlupf,B}$ bei dem zweiten ABS-Regler gegenüber den Schlupfschwellenwerten $g_{Schlupf,A}$ des ersten ABS-Regler größer gewählt sind und wobei der Sollwert DP für die Änderung des Bremsdrucks zu den im ersten Bremsregler ermittelten provisorischen Sollbremsdrücken $P_{soll,prov}$ hinzuaddiert werden und die so erhaltenen Werte dem zweiten Bremsdruckregler zugeführt werden. Ansonsten entspricht das Blockschaltbild dieser Fig. 5 dem Blockschaltbild der Fig. 2.

Im einzelnen zeigt die Fig. 5 das Blockschaltbild des zweiten erfindungsgemäßen Verfahrens Mittels des Lenkrads gibt der Fahrer den Lenkwinkel δ vor. In dem Sollwertgeber 23 wird aufgrund des Lenkwinkels und der Fahrzeuggeschwindigkeit $v_x$ unter Verwendung eines Fahrzeugmodells ein Sollwert $\dot{\Psi}_{soll}$ für die Giergeschwindigkeit und ein Sollwert $\ddot{\Psi}_{soll}$ für die Gierbeschleunigung ermittelt. Im Vergleicher 28 wird sodann unter Verwendung des Istwertes für die Giergeschwindigkeit $\dot{\Psi}_{ist}$ die Regelabweichung $\Delta\Psi$ ermittelt. Die Regelabweichung wird sowohl dem Lenkregler 24 als auch dem Bremsregler 25 zugeführt. Im Lenkregler wird wenigstens ein Sollwert $d_{soll}$ für den Radlenkwinkel ermittelt. Über das Bremspedal 22 gibt der Fahrer einen Bremsdruck $P_{fahrer}$ vor. dieser Wert wird dem ersten ABS-Regler 26a zugeführt, in dem die vom Fahrer vorgegebenen Bremsdrücke auf provisorische Sollwerte $P_{soll,prov,i}$ begrenzt werden, bei dem der Radschlupf an den Rädern den jeweils vorgegebenen ersten Schlupfschwellenwert $g_{Schlupf,A}$ nicht überschreitet. Diese provisorischen Sollwerte $P_{soll,prov,i}$ werden im Addierer 50 mit den Sollwerten $DP_i$ verknüpft und dann dem zweiten ABS-Regler 26b zugeführt. In diesem werden dann die Sollwerte $P_{soll,i}$ für den an den Rädern einzusteuernden Bremdruck so ermittelt, daß die zweiten Schlupfschwellenwerte $g_{Schlupf,B}$ nicht überschritten werden.

Dabei sind die Schlupfschwellenwerte $g_{Schlupf,A}$, $g_{Schlupf,B}$ in der Regel jeweils achsweise vorgegeben; das heißt an einer Fahrzeugachse wird ein größerer Radschlupf zugelassen als an der anderen. Der ermittelte Sollwert für den Radlenkwinkel $d_{soll}$ sowie die Sollbremsdrücke $P_{soll,i}$ für die einzelnen Räder oder Achsen wird durch Steller im Fahrzeug 27 eingeregelt. Der Istwert $\dot{\Psi}_{ist}$ der Giergeschwindigkeit wird im Fahrzeug ermittelt und dem bereits erwähnten Vergleicher 28 zugeführt. In Bezug auf die ABS-Regler ist dabei zu beachten, daß der erste ABS-Regler 26a durch den zweiten in seiner Funktion nicht nachhaltig gestört wird, wenn beide mit einem zurückgeführten Istwert $P_{ist}$ des Bremsdrucks in den Radbremszylindern arbeiten. Dies kann beispielsweise dadurch erreicht werden, daß die Störung auf den zweiten ABS-Regler geschätzt und kompensiert wird oder zumindest im ersten Regler eine ABS-Funktion verwendet wird, die nicht vom Ist-Bremsdruck $P_{ist}$ in den Radbremszylindern abhängig ist.

Die Fig. 6 zeigt das Blockschaltbild eines dritten erfindungsgemäßen Verfahrens. Bei diesem Verfahren wird wiederrum nur ein ABS-Regler verwendet, dabei wird aber der zulässige Radschlupf für die ABS-Regelung radweise oder achsweise in Abhängigkeit des Sollwerts $DP_i$ für die Änderung des Bremsdrucks ermittelt.

Über das Lenkrad 21 gibt der Fahrer den Lenkwinkel d vor, der dem Sollwertgeber 23 zugeführt wird und in dem aufgrund des Lenkwinkels d und der Fahrzeuggeschwindigkeit $v_x$ unter Verwendung eines Fahrzeugmodells ein Sollwert $\dot{\Psi}_{soll}$ für die Giergeschwindigkeit und ein Sollwert $\ddot{\Psi}_{soll}$ für die Gierbeschleunigung ermittelt wird. Im Vergleicher 28 wird dann aus dem Sollwert $\dot{\Psi}_{soll}$ und dem Istwert $\dot{\Psi}_{ist}$ für die Giergeschwindigkeit die Regelabweichung $\Delta\dot{\Psi}$ ermittelt.

Die Regelabweichung $\Delta\dot{\Psi}$ wird sowohl dem Lenkregler 24 als auch dem Bremsregler 25 zugeführt. Im Lenkregler 24 wird wenigstens ein Sollwert $d_{soll}$ für den Radlenkwinkel ermittelt. Im Bremsregler 25 wird der zumindest eine Sollwert $DP_i$ für die Änderung des Bremsdrucks in den Radbremsen ermittelt. Über das Bremspedal 22 gibt der Fahrer einen Bremsdruck $P_{fahrer}$ vor, der im Verknüpfer 60 mit dem mindestens einen Sollwert $DP_i$ verknüpft werden und anschließend dem ABS-Regler 26 zugeführt werden. Von dem Bremsregler 25 werden dem ABS-Regler 26 auch Werte für die Schlupfschwellenanpassung $d_{grenze,i}$ zugeführt, wobei diese Werte in Abhängigkeit der Sollwerte $DP_1$ für die Änderung des Bremsdrucks ermittelt werden. Hierbei kann eine Schlupfschwellenanpassung $d_{grenze,i}$ für jedes Rad einzeln oder auch für die Räder einer Achse gemeinsam ermittelt werden. Dies ist davon abhängig, ob Sollwerte $DP_i$ für die Änderung des Bremdrucks achsweise oder radweise ermittelt werden. Eine radweise oder achsweise Schlupfschwellenanpassung ist unabhängig davon, ob achsweise unabhängige Schlupfschwellenwerte $g_{Schlupf,i}$ achsweise vorgegeben sind oder nicht.

Die Schlupfschwellenanpassung $d_{grenze,i}$ kann dabei wie folgt vorgenommen werden:

Dazu wird eine Beziehung zwischen dem Sollwert $DP_1$ der Änderung des Bremsdrucks und dem Umfangsschlupf des Rades $l_U$ benötigt.

Eine solche Beziehung ergibt kann aus der Annahme entnommen werden, daß der Bremsdruck $P_1$ in Radbremsen zu der Umfangskraft

$U_1$ proportional ist. Die Fig. 6a zeigt die Kurve U(l) über dem Schlupf $l_U$. Ist zusätzlich die Kennlinie U(l) bekannt, so kann jeder Druckänderung $DP_1$ eine Änderung des Schlupfes $Dl(DP_i)$ zugeordnet werden. Diese Schlupfänderung $Dl(DP_i)$ wird dann als

Änderung der Schlupfschwellenanpassung $d_{grenze,i}$ herangezogern, es gilt also $d_{grenze,i}=Dl(DP_i)$. Im Bereich des Haftens entspricht eine Erniedrigung des Bremsdrucks also einer betraglichen Erniedrigung des zulässigen Radschlupfes $g_{zul,i}$, da die Schlupfschwellenanpassung $d_{grenze,i}$ dann ein negatives Vorzeichen aufweist.

Jedoch ist im allgemeinen die Kennlinie U(l) nicht bekannt, da sie von vielen Einflußfaktoren, beispielsweise dem Schräglaufwinkes $a_h$ der Hinterachse und den unbekannten Größen der Hochkragt $F_z$ und Haftreibungszahl m, abhängig ist. Daher kann zur Bestimmung der Schlupfschwellenanpassung ein bestimmter typischer Verlauf der Kurve U(l) als Beziehung zwischen Umfangskraft $U_i$ und Schlupf $l_U$ angenommen werden. Eine weitere Vereinfachung wird dadurch erreicht, daß als Beziehung zwischen Umfangskraft $U_i$ und Schlupf l eine lineare Beziehung angenommen wird, wie dies in der Fig. 6a als Kurve $U_d(l)$ gestrichelt dargestellt ist. Anhand dieser angenommenen linearen Beziehung kann auch die Ermittlung der Schlupfschwellenanpassung $d_{grenze,i}$ werden: weist die lineare Beziehung die Steigung $k_d$ auf, so ergibt sich, daß

$$d_{grenze,i} = \frac{1}{k_d}\Delta P_i \qquad\qquad (15)$$

gilt. Graphisch ergibt sich, daß wenn der Sollwert $DP_i$ für Änderung des Bremsdrucks als Intervall auf der Ordinate aufgetragen wird, der Abstand zwischen den Abszissenwerten der Schnittpunkte der Intervallgrenzen mit der angenommenen Beziehung zwischen Umfangskraft $U_1$ und Schlupf $l_U$ - in der Fig 6a ist dies stichpunktiert für die Gerade $U_d(l)$ dargestellt - die Schlupfschwellenänderung $d_{grenze,i}$ ergibt.

Im ABS-Regler 26 wird der für die jeweilige Achse oder das jeweilige Rad zulässige Radschlupf $g_{zul,i}$ dadurch ermittelt, daß zu der vorgegebenen Schlupfgrenze $g_{schlupf,i}$ die Schlupfschwellenanpassung $d_{grenze,i}$ hinzuaddiert wird, also gilt

$$g_{zul,i}=g_{Schlupf,i}+d_{prenze,i}. \qquad\qquad (16)$$

Damit die Schlupfgrenze nicht beliebig, sondern nur bis zu einem vorgegebenen Maximalwert $g_{zul,max}$ steigt ist der zulässige Radschlupf $g_{zul,i}$ nach oben auf einen Wert begrenzt, der in dem Intervall

$$g_{zul,max} \in [g_{Schlupf,i}, \ 1,5 \cdot g_{Schlupf,i}] \qquad\qquad (17)$$

liegt. Danach werden im ABS-Regler die jeweiligen Sollbremsdrücke $P_{soll,i}$ aus dem vom Fahrer vorgegebenen Bremsdruck $P_{fahrer}$ und den Sollwerten $DP_i$ für die Änderung des Bremsdrucks so emittelt, daß der zulässige Schlupf $g_{zul,i}$ nicht überschritten wird. Diese Sollbremsdrücke $P_{soll,i}$ sowie der Sollwert $d_{soll}$ für den Radlenkwinkel werden dann am Fahrzeug eingeregelt. Der Istwert $\dot{\Psi}_{ist}$ der Giergeschwindigkeit wird im Fahrzeug 27 ermittelt und dem Vergleicher 28 zugeführt.

**Formelzeichen**

Indizes

i ...          laufende Nummer von 0 bis 3 oder v, l
0, ..., 3 ...    Nummerierung der Räder des Fahrzeugs
v ...          vorne
h ...          hinten
b ...          beide, hinten und vorne
ist ...        Istwert einer Größe
fahrer ...    vom Fahrer vorgegeben
soll ...       ermittelter Sollwert
x ...          Längsachse des Fahrzeugs
y ...          Querachse des Fahrzeugs
z ...          Hochachse
AP ...       Arbeitspunkt
LQR ...     Lineare Regelgleichung, Quadratisches Güteintegreal des Reglers
w...         aus vom Fahrer vorgegebenen Größen ermittelter Wunschwert einer daraus abgeleiteten Größe

Einer Größe vorangestellt:

D ...     Differenz zwischen zwei Werten, der nachfolgenden Größe

Bewegungsgrößen

$\dot{\Psi}$ ...     Giergeschwindigkeit
$\ddot{\Psi}$ ...     Gierbeschleunigung
v ...     Geschwindigkeit, mit Index bezüglich einer Achse
$\dot{v}$ ...     Beschleunigung, mit Index bezüglich einer Achse

Kräfte

S ...     Seitenkraft, mit Index an einem Rad
U ...     Umfangskraft, mit Index an einem Rad

Druck

$P_i$ ...     Bremsdruck am Rad i
$P_{fahrer}$ ...     Bremsdruck, abgeleitet aus einer Fahrervorgabe
$DP_i$ ...     Bremsdruckängerung am Rad i
$P_{soll}$ ...     Bremsdruck, der zu erzeugen ist; mit Index am Rad i

Winkel

d ...          Lenkwinkel
$d_{soll}$ ...      Radlenkwinkel, der zu erzeugen ist
b ...          Schwimmwinkel
Y ...          Gierwinkel

Dimensionslose Größen

$l_U$ ...      Umfangsschlupf

Fahrzeugparameter

SP ...       Schwerpunkt
m ...        Masse des Fahrzeugs
s ...         Spur
I ...          Massenträgheitsmoment des Fahrzeugs um eine Achse
$c_s$ ...       Schräglaufsteifigkeit des Reifens
L ...         Abstand zwischen den Fahrzeugachsen
$l_v$ ...       Abstand Vorderachse - Schwerpunkt
$l_h$ ...       Abstand Hinterachse - Schwerpunkt
$K_P$ ...       Proportionalitätsfaktor zwischen Umfanskraft und Bremsdruck

**Patentansprüche**

1. Verfahren zur Regelung des Gierverhaltens von Fahrzeugen, wobei

   • unter Verwendung des vom Fahrer vorgegebenen Lenkwinkels ($\delta_{fahrer}$) und einem ermittelten Wert der Fahrzeuggeschwindigkeit ($v_x$) ein Sollwert ($\dot{\Psi}_{soll}$) für die Giergeschwindigkeit ermittelt wird,
   • ein Istwert ($\dot{\Psi}_{ist}$) der Giergeschwindigkeit ermittelt wird,
   • aus der Differenz zwischen dem Istwert ($\dot{\Psi}_{ist}$) und dem Sollwert ($\dot{\Psi}_{soll}$) für die Giergeschwindigkeit die Regelabweichung ($\Delta\dot{\Psi}$) ermittelt wird,

   wobei die Regelabweichung ($\Delta\dot{\Psi}$) einem Lenkregler und einem Bremsregler zugeführt wird,

   • wobei im Lenkregler wenigstens ein Sollwert für den Radlenkwinkel ($\delta_{soll}$) gelenkter Räder und
   • wobei im Bremsregler wenigstens ein Sollwert (DP) für die Änderung des Bremsdrucks gebremster Räder ermittelt wird,
   • wobei unter Berücksichtigung des wenigstens einen Sollwerts (DP) für die Änderung des Bremsdrucks ein Sollbremsdruck ($P_{soll,i}$) ermittelt wird wobei der Lenkregler und der Brennsregler die jeweiligen Sollwerte unabhängig voneinander ermitteln

   und wobei über den Fahrzeugrädern individuell zugeordnete Bremsdruckstellglieder in den Radbremszylinden der zugehörige Sollbremsdruck ($P_{soll}$) und über Lenkstellglieder an den gelenkten Rädern der zugehörige Radlenkwinkel ($\delta_{soll}$) eingestellt wird, und
   wobei über einen festlegbaren Gewichtungsfaktor (q/r) der Einfluß des Bremsreglers auf das Fahrzeug im Verhältnis zum Lenkregler bestimmbar ist,
   **dadurch gekennzeichnet,**
   **daß** der Gewichtungsfaktor (q/r) das Verhalten des Bremsreglers beeinflußt und das Verhalten des Lenkreglers unverändert bleibt.

**2.** Verfahren nach Anspruch 1,
**dadurch gekennzeichnet, daß** der wenigstens eine Sollbremsdruck (P_soll) aus einem vom Fahrer vorgegebenen Bremsdruck (P_fahrer) und aus dem wenigstens einen Sollwert (DP) so ermittelt wird, daß das Überschreiten wenigstens einer vorgegebenen Schlupfgrenze (g_schlupf,i) verhindert wird.

**3.** Verfahren nach Anspruch 1 oder 2,
**dadurch gekennzeichnet,**
**daß** die Radbremszylinder in Gruppen zusammengefaßt sind, wobei eine Gruppe aus wenigstens einem Radbremszylinder gebildet wird, wobei für jede Gruppe ein Sollbremsdruck (P_soll) ermittelt wird.

**4.** Verfahren nach Anspruch 3,
**dadurch gekennzeichnet,**
**daß** für jede Gruppe von Radbremszylindern ein Sollwert (DP) für die Änderung des Bremsdrucks ermittelt wird.

**5.** Verfahren nach Anspruch 1,
**dadurch gekennzeichnet,**
**daß** jeweils für die Räder einer gelenkten Achse ein Sollwert ($\delta_{soll}$) für den Radlenkwinkel ermittelt wird.

**6.** Verfahren nach Anspruch 1,
**dadurch gekennzeichnet,**
**daß** bei der Ermittlung der Sollwerte für den Radlenkwinkel ($\delta_{soll}$) angenommen wird, daß die auf die Fahrbahn übertragenen Umfangskräfte an beiden Fahrzeugseiten gleich sind.

**7.** Verfahren nach Anspruch 1 oder 6,
**dadurch gekennzeichnet,**
**daß** bei der Ermittlung des Sollwertes für die Änderung des Bremsdrucks (DP) angenommen wird, daß keine Seitenkräfte auf die Fahrbahn übertragen werden.

**8.** Verfahren nach Anspruch 1,
**dadurch gekennzeichnet,**
**daß** der Gewichtungsfaktor (q/r) in Abhänigigkeit von vom Fahrer vorgegebenen Größen ermittelt wird.

**9.** Verfahren nach Anspruch 8,
**dadurch gekennzeichnet,**
**daß** die vom Fahrer vorgegebenen Größen der Lenkradwinkel ($\delta$) und der Bremsdruck (P_Fahrer) sind, wobei

- aus dem Lenkwinkel ($\delta$) eine gewünschte Seitenkraft (S_W) und
- aus dem Bremsdruck (P_fahrer) eine gewünschte Umfangskraft (U_W) abgeleitet wird, und daß der Gewichtungsfaktor so bestimmt wird, daß
- mit steigendem Seitenkraftwunsch (S_W) der Gewichtungsfaktor (q/r) und damit der Einfluß des Bremsreglers sinkt und
- mit steigendem Umfangskraftwunsch (U_W) der Gewichtungsfaktor (q/r) und damit der Einfluß des Bremsreglers steigt.

**10.** Verfahren nach Anspruch 1,
**dadurch gekennzeichnet,**
**daß** die Abweichung (Dd) des Sollwertes für den Radlenkwinkel ($\delta_{soll}$) gelenkter Räder von dem Radlenkwinkel, der sich aus dem Lenkwinkel ($\delta$) ergibt, auf ein bestimmtes vorgegebenes Maß begrenzt ist, insbesondere auf einen Wert zwischen 5° und 10° begrenz ist.

**11.** Verfahren nach Anspruch 1 oder 10,
**dadurch gekennzeichnet,**
**daß** die Abweichung (Dd) des Radlenkwinkels (d_soll) von dem Radlenkwinkel d_soll (m=1), der erforderlich ist, um bei einem Kraftschlußbeiwert m=1 die Sollgiergeschwindigkeit $\dot{\Psi}_{soll}(\delta)$ zu erreichen, die sich aus dem vom Fahrer vorgegebenen Lenkwinkel d ergibt, auf einen Wert zwischen 5° und 10° begrenzt sein.

**12.** Verfahren nach Anspruch 1,
**dadurch gekennzeichnet,**

**daß** der Sollwert des Radlenkwinkels ($\delta_{soll}$) auf einen Wert ($\delta^*_{soll}$) begrenzt ist, der so bestimmt wird, daß der Schräglaufwinkel ($a_v$) der gelenkten Räder einen Grenzwert ($a_{max}$) nicht überschreitet.

13. Verfahren nach Anspruch 2,
**dadurch gekennzeichnet,**
**daß** der Sollbremsdruck ($P_{soll}$) dadurch ermittelt wird,

- **daß** zunächst der vom Fahrer vorgegebene Bremsdruck ($P_{fahrer}$) für jedes Rad auf einen Wert begrenzt wird, der so bestimmt ist, daß der Schlupf an den Rädern bei diesem Bremsdruck einen ersten Schlupfschwellenwert ($g_{Schlupf,A}$) nicht überschreiten würde,
- **daß** zu diesem Wert der wenigstens eine Sollwert (DP) für die Änderung des Bremsdrucks addiert wird und
- **daß** der durch diese Addition erhaltene Wert auf einen Wert begrenzt wird, der so bestimmt ist, daß der Schlupf an den Rädern einen zweiten Schlupfschwellenwert ($g_{Schlupf,B}$), der großer ist als der erste Schlupfschwellenwert, nicht übersteigt.

14. Verfahren nach Anspruch 13,
**dadurch gekennzeichnet,**
**daß** für jede Achse des Fahrzeugs jeweils unabhängige erste und zweite Schlupfschwellenwerte ($g_{Schlupf,A}$; $g_{Schlupf,B}$) vorgegeben sind.

15. Verfahren nach Anspruch 2,
**dadurch gekennzeichnet,**
**daß** im Bremsregler neben dem wenigstens einen Sollwert (DP) für die Änderung des Bremsdrucks auch wenigstens eine Schlupfschwellenanpassung ($d_{grenze,i}$) ermittelt wird,
wobei der zulässige Radschlupf ($g_{zul,i}$) aus der wenigstens einen vorgegebenen Schlupfgrenze ($g_{Schlupf,i}$) und der jeweiligen Schlupfschwellenanpassung ($d_{grenze,i}$) ermittelt wird und
**daß** der Sollbremsdruck ($P_{soll,i}$) auf einen solchen Wert begrenzt wird, daß der jeweils zulässige Radschlupf ($g_{zul,i}$) nicht überschritten wird.

16. Verfahren nach Anspruch 2 oder 15,
**dadurch gekennzeichnet,**
**daß** für jede Achse des Fahrzeugs eine Schlupfgrenze ($g_{Schlupf,i}$) vorgegeben ist.

17. Verfahren nach Anspruch 15 oder 16,
**dadurch gekennzeichnet,**
**daß** für jede vorgegebene Schlupfgrenze ($g_{Schlupf,i}$) eine Schlupfschwellenanpassung ($d_{grenze,i}$) ermittelt wird.

18. Verfahren nach Anspruch 15 oder 17,
**dadurch gekennzeichnet,**
**daß** die Schlupfschwellenanpassung ($d_{grenze,i}$) ermittelt wird, indem jedem Sollwert (DP) für die Änderung des Bremsdrucks eine Schlupfschwellenanpassung ($d_{grenze,i}$) zugeordnet wird.

19. Verfahren nach Anspruch 18,
**dadurch gekennzeichnet,**
**daß** die Zuordnung aufgrund der Beziehung zwischen Schlupf und Bremsdruck erfolgt, wobei der Betrag der Schlupfschwellenanpassung ($d_{grenze,i}$) der Änderung des Schlupfes entspricht, die sich ergibt, wenn der Bremdruck um den Sollwert (DP) verändert wird und wobei das Vorzeichen der Schlupfschwellenanpassung ($d_{grenze,i}$) dem Vorzeichen des Sollwerts ($DP_i$) der Änderung des Bremsdrucks entspricht.

20. Verfahren nach Anspruch 19,
**dadurch gekennzeichnet,**
**daß** als Beziehung zwischen Schlupf und Bremsdruck eine gerade positiver Steigung angenommen wird.

21. Verfahren nach einem der Ansprüche 15 bis 20,
**dadurch gekennzeichnet,**
**daß** der zulässige Schlupf ($g_{zul,i}$) auf einen Maximalwerte begrenzt ist, der zwischen 100% und 150% der vorgegebenen Schlupfgrenze ($g_{Schlupf,i}$) beträgt.

**Claims**

1. Method of controlling the yaw behaviour of vehicles, in which

   - a desired value ($\dot{\Psi}_{desired}$) for the yaw speed is determined on the basis of the steering angle ($\delta_{driver}$) and a detected value of the vehicle speed ($v_x$),

   - an actual value ($\dot{\Psi}_{actual}$) of the yaw speed is detected,

   - the control variance ($\Delta\dot{\Psi}$) is determined on the basis of the difference between the actual value ($\dot{\Psi}_{actual}$) and the desired value ($\dot{\Psi}_{desired}$) for the yaw speed,

   the control variance ($\Delta\dot{\Psi}$) being forwarded to a steering controller and a brake controller,

   - at least one desired value for the wheel steering angle ($\delta_{desired}$) of steered wheels being determined in the steering controller and
   - at least one desired value (DP) for the change in the brake pressure of braked wheels being determined in the brake controller,
   - a desired brake pressure ($P_{desired.i}$) being determined taking account of at least one desired value (DP) for the change in brake pressure,

   the steering controller and the brake controller determining the respective desired values independently of one another, and the associated desired brake pressure ($P_{desired}$) is applied at the wheel brake cylinders by means of brake pressure actuators co-operating with the individual vehicle wheels and

   the associated wheel steering angle ($\delta_{desired}$) being applied at the steered wheels by means of steering actuators, and whereby the influence of the brake controller on the vehicle can be determined proportionally to the steering controller by means of a settable weighting factor (q/r),
   **characterised in that**
   the weighting factor (q/r) influences the behaviour of the brake controller and the behaviour of the steering controller remains unchanged.

2. Method as claimed in claim 1,
   **characterised in that**
   the at least one desired brake pressure ($P_{desired}$) based on a brake pressure ($P_{driver}$) determined by the driver and on the at least one desired value (DP) is determined in such a way as to prevent at least one pre-set slip threshold ($g_{slip.i}$) from being exceeded.

3. Method as claimed in claim 1 or 2,
   **characterised in that**
   the wheel brake cylinders are arranged in groups, a group being made up of at least one wheel brake cylinder, and a desired brake pressure ($P_{desired}$) is determined for each group.

4. Method as claimed in claim 3,
   **characterised in that**
   a desired value (DP) for the change in brake pressure is determined for every group of wheel brake cylinders.

5. Method as claimed in claim 1,
   **characterised in that**
   a desired value ($\delta_{desired}$) for the wheel steering angle is determined respectively for the wheels of a steered axle.

6. Method as claimed in claim 1,
   **characterised in that**
   when determining the desired values for the wheel steering angle ($\delta_{desired}$), it is assumed that the circumferential forces applied to the road are the same on both sides of the vehicle.

7. Method as claimed in claim 1 or 6,
   **characterised in that**
   when determining the desired value for the change in brake pressure (DP), it is assumed that no lateral forces are transmitted to the road.

**8.** Method as claimed in claim 1,
**characterised in that**
the weighting factor (q/r) is determined depending on variables input by the driver.

**9.** Method as claimed in claim 8,
**characterised in that**
the variables input by the driver are the steering wheel angle ($\delta$) and the brake pressure ($P_{driver}$),

- a lateral force requirement ($S_W$) being derived from the steering angle ($\delta$) and
- a circumferential force requirement ($U_W$) being derived from the brake pressure ($P_{driver}$),

and the weighting factor is determined so that

- the weighting factor (q/r) and hence the influence of the brake controller decreases as the lateral force requirement ($S_W$) increases and

- the weighting factor (q/r) and hence the influence of the brake controller increases as the circumferential force requirement ($U_W$) increases.

**10.** Method as claimed in claim 1,
**characterised in that**
the variance (Dd) of the desired value for the wheel steering angle ($\delta_{desired}$) of steered wheels from the wheel steering angle resulting from the steering angle ($\delta$) is limited to a specific pre-set amount, in particular is limited to a value of between 5° and 10°.

**11.** Method as claimed in claim 1 or 10,
**characterised in that**
the variance (Dd) of the wheel steering angle ($d_{desired}$) from the wheel steering angle $d_{desired}$ (m = 1) needed to obtain the desired yaw speed $\Psi_{desired}(\delta)$ for an adhesion coefficient of m = 1 which is obtained on the basis of the steering angle d determined by the driver is limited to a value of between 5° and 10°.

**12.** Method as claimed in claim 1,
**characterised in that**
the desired value of the wheel steering angle ($\delta_{desired}$) is limited to a value ($\delta^*_{desired}$) which is determined so that the oblique angle ($a_v$) of the steered wheel does not exceed a threshold value ($a_{max}$).

**13.** Method as claimed in claim 2,
**characterised in that**
the desired brake pressure ($P_{desired}$) is determined

- firstly by limiting the brake pressure input by the driver ($P_{driver}$) for every wheel to a value which is determined so that the slip at the wheels does not exceed a first slip threshold value ($g_{slip.A}$) at this brake pressure,
- the at least one desired value (DP) for the change in brake pressure is added to this value and
- the value obtained as a result of this addition is limited to a value which is determined so that the slip at the wheels does not exceed a second slip threshold value ($g_{slip.B}$) that is higher than the first slip threshold value.

**14.** Method as claimed in claim 13,
**characterised in that**
respectively independent first and second slip threshold values ($g_{slip.A}$, $g_{slip.B}$) are predetermined for every axle of the vehicle.

**15.** Method as claimed in claim 2,
**characterised in that**
in addition to the at least one desired value (DP) for the change in brake pressure, at least one slip threshold adjustment ($d_{threshold.i}$) is also determined in the brake controller, the permissible wheel slip ($g_{per.i}$) being determined from the at least one predetermined slip threshold ($g_{slip.i}$) and the respective slip threshold adjustment ($d_{threshold.i}$),

and the desired brake pressure ($P_{desired.i}$) is limited to a value such that the respective permissible wheel slip ($g_{per.i}$) is not exceeded.

16. Method as claimed in claim 2 or 15,
    **characterised in that**
    a slip threshold ($g_{slip.i}$) is predetermined for every axle of the vehicle.

17. Method as claimed in claim 15 or 16,
    **characterised in that**
    a slip threshold adjustment ($d_{threshold.i}$) is determined for every predetermined slip threshold ($g_{slip.i}$).

18. Method as claimed in claim 15 or 17,
    **characterised in that**
    the slip threshold adjustment ($d_{threshold.i}$) is determined by correlating a slip threshold adjustment ($d_{threshold.i}$) with every desired value (DP) for the change in brake pressure.

19. Method as claimed in claim 18,
    **characterised in that**
    the correlation is based on the relationship between slip and brake pressure, the amount of the slip threshold adjustment ($d_{threshold.i}$) corresponding to the change in slip resulting when the brake pressure varies by the desired value (DP), and the sign of the slip threshold correction ($d_{threshold.i}$) corresponds to the sign of the desired value (DP) of the change in brake pressure.

20. Method as claimed in claim 19,
    **characterised in that**
    it is assumed that the correlation between slip and brake pressure is a straight, positive slope.

21. Method as claimed in one of claims 15 to 20,
    **characterised in that**
    the permissible slip ($g_{per.i}$) is limited to a maximum value which is between 100% and 150% of the predetermined slip threshold ($g_{slip.i}$).

**Revendications**

1. Procédé pour le règlement de l'attitude de lacet de véhicules, dans lequel

   - en appliquant l'angle de guidage ($\delta_{conducteur}$) prédéfini par le conducteur et une valeur déterminée de la vitesse du véhicule ($v_x$), une valeur prescrite ($\Psi_{prescrite}$) est déterminée pour la vitesse de lacet,
   - une valeur réelle ($\Psi_{réelle}$) de la vitesse de lacet est déterminée,
   - l'écart de réglage ($\Delta\Psi$) est déterminé à partir de la différence entre la valeur réelle ($\Psi_{réelle}$) et la valeur prescrite ($\Psi_{prescrite}$) pour la vitesse de lacet,

     l'écart de réglage ($\Delta\Psi$) étant apporté par un régulateur de guidage et un régulateur de freinage,

   - au moins une valeur prescrite étant déterminée dans le régulateur de guidage pour l'angle de guidage de roue ($\delta_{prescrit}$) des roues guidées et
   - au moins une valeur prescrite (DP) étant déterminée dans le régulateur de freinage pour la modification de la pression de freinage des roues freinées,
   - compte tenu d'au moins une des valeurs prescrites (DP) pour la modification de la pression de freinage, une pression de freinage prescrite ($P_{prescrite.1}$) étant déterminée, le régulateur de guidage et le régulateur de freinage déterminant indépendamment chacune des valeurs prescrites et la pression de freinage prescrite ($P_{prescrite}$) correspondante étant ajustée dans les cylindres de frein sur roue via des organes de réglage de la pression de freinage affectés individuellement sur les roues du véhicule et l'angle de guidage de roue ($\delta_{prescrit}$) correspondant étant ajusté via des organes de réglage du guidage sur les roues guidées, et

     l'influence du régulateur de freinage sur le véhicule étant déterminable par rapport au régulateur de guidage via un facteur de pondération (q/r) définissable,

**caractérisé en ce que**

le facteur de pondération (q/r) influence le comportement du régulateur de freinage et que le comportement du régulateur de guidage reste inchangé.

2. Procédé selon la revendication 1,

**caractérisé en ce que**

au moins une des pressions de freinage prescrite ($P_{prescrite}$) est déterminée à partir d'une pression de freinage ($P_{conducteur}$) prédéfinie par le conducteur et à partir d'au moins une des valeurs prescrites (DP) de manière à ce que le dépassement d'au moins une des limites de glissement ($g_{glissement.1}$) prédéfinies est empêché.

3. Procédé selon la revendication 1 ou 2,

**caractérisé en ce que**

les cylindres de frein sur roue sont rassemblés en groupes, un groupe étant formé au minimum d'un cylindre de frein sur roue, une pression de freinage prescrite ($P_{prescrite}$) étant déterminée pour chaque groupe.

4. Procédé selon la revendication 3,

**caractérisé en ce que**

une valeur prescrite (DP) pour la modification de la pression de freinage est déterminée pour chaque groupe de cylindres de frein sur roue.

5. Procédé selon la revendication 1,

**caractérisé en ce que**

une valeur prescrite ($\delta_{prescrit}$) pour l'angle de guidage de roue est déterminée pour chacune des roues d'un essieu de direction.

6. Procédé selon la revendication 1,

**caractérisé en ce que**

lors de la détermination des valeurs prescrites pour l'angle de guidage de roue ($\delta_{prescrit}$), on part du principe que les forces périphériques transmises sur la chaussée sont identiques sur les deux côtés du véhicule.

7. Procédé selon la revendication 1 ou 6,

**caractérisé en ce que**

lors de la détermination de la valeur prescrite pour la modification de la pression de freinage (DP), on suppose qu'aucune force latérale n'est transmise sur la chaussée.

8. Procédé selon la revendication 1,

**caractérisé en ce que**

le facteur de pondération (q/r) est déterminé en fonction des grandeurs prédéfinies par le conducteur.

9. Procédé selon la revendication 8,

**caractérisé en ce que**

les grandeurs prédéfinies par le conducteur sont l'angle du volant ($\delta$) et la pression de freinage ($P_{conducteur}$),

- une force latérale prévue ($S_w$) étant déduite à partir de l'angle de guidage ($\delta$) et
- une force périphérique prévue ($U_w$) étant déduite à partir de la pression de freinage ($P_{conducteur}$),

  et que le facteur de pondération est défini de telle manière que

- avec une force latérale prévue croissante ($S_w$), le facteur de pondération (q/r) et, avec lui, l'influence du régulateur de freinage diminuent et
- avec une force périphérique prévue croissante ($U_w$), le facteur de pondération (q/r) et, avec lui, l'influence du régulateur de freinage augmentent.

10. Procédé selon la revendication 1,

**caractérisé en ce que**

l'écart (Dd) de la valeur prescrite pour l'angle de guidage de roue ($\delta_{prescrit}$) des roues guidées par rapport à l'angle de guidage de roue qui résulte de l'angle de guidage ($\delta$) est limité à une certaine mesure prédéfinie, en particulier limité à une valeur comprise entre 5° et 10°.

**11.** Procédé selon la revendication 1 ou 10,

**caractérisé en ce que**

l'écart (Dd) de l'angle de guidage de roue ($d_{prescrit}$) par rapport à l'angle de guidage de roue $d_{prescrit}$ (m=1) qui est nécessaire pour atteindre, en cas d'un coefficient d'adhérence m=1, la vitesse de lacet prescrite $\Psi_{prescrite}$ ($\delta$) qui résulte de l'angle de guidage d prédéfinie par le conducteur, est limité à une valeur comprise entre 5° et 10°.

**12.** Procédé selon la revendication 1,

**caractérisé en ce que**

la valeur prescrite de l'angle de guidage de roue ($\delta_{prescrit}$) est limitée à une valeur ($\delta°_{prescrit}$) qui est déterminée de manière à ce que l'inclinaison de l'axe-pivot ($a_v$) des roues guidées ne dépasse pas une valeur limite ($a_{max}$).

**13.** Procédé selon la revendication 2,

**caractérisé en ce que**

la pression prescrite de freinage ($P_{prescrite}$) est déterminée de manière

- à ce que tout d'abord, la pression de freinage ($P_{conducteur}$) prédéfinie par le conducteur pour chaque roue est limitée à une valeur qui est définie de telle manière que le glissement sur les roues pour cette pression de freinage ne dépasserait pas une première valeur de seuil de glissement ($g_{glissement.A}$),
- à ce qu'au moins une des valeurs prescrites (DP) est ajoutée à cette valeur pour la modification de la pression de freinage et
- à ce que la valeur obtenue grâce à cette addition est limitée à une valeur qui est définie de telle manière que le glissement sur les roues ne franchisse pas une deuxième valeur de seuil de glissement ($g_{glissement.B}$) qui est supérieure à la première valeur de seuil de glissement.

**14.** Procédé selon la revendication 13,

**caractérisé en ce que**

pour chaque essieu du véhicule, une première et une deuxième valeur de seuil de glissement ($g_{glissement.A}$ ; $g_{glissement.B}$), étant chacune indépendante, sont prédéfinies.

**15.** Procédé selon la revendication 2,

**caractérisé en ce que**

dans le régulateur de freinage, en plus d'au moins une des valeurs prescrites (DP) pour la modification de la pression de freinage, également au moins un ajustement du seuil de glissement ($d_{limite.1}$) est déterminé, le glissement de roue admissible ($g_{admissible.1}$) étant déterminé à partir d'au moins une des limites de glissement ($g_{glissement.1}$) prédéfinies et de l'ajustement du seuil de glissement ($d_{limite.1}$) correspondant et que la pression prescrite de freinage ($P_{prescrite.1}$) est limitée à une telle valeur que le glissement de roue admissible ($g_{admissible.1}$) à chaque fois n'est pas dépassé.

**16.** Procédé selon la revendication 15,

**caractérisé en ce que**

une limite de glissement ($g_{glissement.1}$) est prédéfinie pour chaque essieu du véhicule.

**17.** Procédé selon la revendication 15 ou 16,

**caractérisé en ce que**

un ajustement du seuil de glissement ($d_{limite.1}$) est déterminé pour chaque limite de glissement ($g_{glissement.1}$) prédéfinie.

**18.** Procédé selon la revendication 15 ou 17,

**caractérisé en ce que**

l'ajustement du seuil de glissement ($d_{limite.1}$) est déterminé en affectant un ajustement du seuil de glissement ($d_{limite.1}$) à chaque valeur prescrite (DP) pour la modification de la pression de freinage.

**19.** Procédé selon la revendication 18,

**caractérisé en ce que**

l'affectation se fait sur la base du rapport entre glissement et pression de freinage, la valeur de l'ajustement du seuil de glissement ($d_{limite.1}$) correspondant à la modification du glissement qui s'ensuit si la pression de freinage est modifiée par la valeur prescrite (DP) et le signe de l'ajustement du seuil de glissement ($d_{limite.1}$) correspondant au signe de la valeur prescrite ($DP_1$) de la modification de la pression de freinage.

**20.** Procédé selon la revendication 19,
**caractérisé en ce que**
une droite d'inclinaison positive est supposée pour le rapport entre glissement et pression de freinage.

**21.** Procédé selon l'une quelconque des revendications 15 à 20,
**caractérisé en ce que**
le glissement admissible ($g_{admissible.1}$) est limité à une valeur maximum qui est comprise entre 100% et 150% de la limite de glissement ($g_{glissement.1}$) prédéfinie.

Fig. 1

Fig. 2

Fig. 4

Fig. 3

Fig. 5

Fig. 6

Fig. 6a